# EUROPEAN PATENT SPECIFICATION

(11) **EP 4 197 248 B1**
(45) Date of publication and mention of the grant of the patent: **23.07.2025**
(21) Application number: 20949029.1
(22) Date of filing: 12.08.2020
(51) Int. Cl.: H04W 56/00, H04L 5/00

(54) **HANDLING OF CSI-RS MEASUREMENT**
HANDHABUNG VON CSI-RS-MESSUNG
GESTION DE MESURE DE CSI-RS

(43) Date of publication of application: 21.06.2023
(73) Proprietor: Nokia Technologies Oy, 02610 Espoo (FI)
(72) Inventor: DU, Lei, Beijing 100085 (CN); DALSGAARD, Lars, 90230 Oulu (FI)
(74) Representative: Cohausz & Florack
(86) International application number: PCT/CN2020/108717
(87) International publication number: WO 2022/032530

(56) References cited:
- WO-A1-2018/128862
- WO-A1-2018/204846
- WO-A1-2019/157661
- WO-A1-2020/005587
- CN-A- 110 972 178
- CATT: "Email discussion summary for RAN4#95- e_#225_NR_CSIRS_L3meas_RRM_Part_1", vol. RAN WG4, no. Electronic Meeting; 20200525 - 20200605, 10 June 2020 (2020-06-10), XP051896689, Retrieved from the Internet <URL:https://ftp.3gpp.org/tsg_ran/WG4_Radio/TSGR4_95_e/Docs/R4-2009037.zip R4-2009037 [225]_2nd_round_Summary-v2.docx> [retrieved on 20200610]

## Description

### FIELD

Embodiments of the present disclosure generally relate to the field of telecommunication and in particular, to devices, methods and computer readable storage media for handling of channel state information reference signal (CSI-RS) measurement.

### BACKGROUND

CSI-RS has been designed for tracking and beam management as well as for Layer 3 (L3) mobility management, thus for handover (HO) purposes. Compared to Synchronization Signal Block (SSB) based measurement, CSI-RS based L3 measurement can provide finer beam information. Therefore, CSI-RS based L3 measurement enables a network device to handover user equipment (UE) directly to the more refined beam in a target cell during the handover procedure. The CSI-RS based L3 measurements are impacted by the network synchronization as well as the alignment of the received signals from different cells at the UE. These aspects together pose a problem of how to handle when there is synchronization problem with the CSI-RS based L3 measurements.

Document CATT: "Email discussion summary for RAN4#95-e_#225_NR_CSIRS_L3meas_RRM_Part_1", 3GPP DRAFT; R4-2009037, (2020-06-10) discusses CSI-RS measurement and synchronization. Document WO2019/157661A1 (ZTE CORP [CN]) (2019-08-22) discusses timing configuration using a timing difference between a serving cell and a target cell.

### SUMMARY

In general, example embodiments of the present disclosure provide a solution for handling of CSI-RS measurement.

A first device, a second device and corresponding methods performed by the first and second device are defined by the appended independent claims 1, 11, 16, 17 respectively. The invention is defined by the appended claims.

### BRIEF DESCRIPTION OF THE DRAWINGS

Some example embodiments will now be described with reference to the accompanying drawings, where:
Fig. 1 illustrates an example communication network in which example embodiments of the present disclosure may be implemented;
Fig. 2 illustrates a schematic diagram of timing difference among different cells;
Fig. 3 illustrates a flowchart illustrating an example process for handling CSI-RS measurement according to some embodiments of the present disclosure;
Fig. 4 illustrates a flowchart illustrating an example process for handling CSI-RS measurement according to some embodiments of the present disclosure;
Fig. 5 illustrates a flowchart illustrating an example process for handling CSI-RS measurement according to some embodiments of the present disclosure;
Fig. 6 illustrates a flowchart illustrating an example process for handling CSI-RS measurement according to some embodiments of the present disclosure;
Fig. 7 illustrates a flowchart of an example method according to some embodiments of the present disclosure;
Fig. 8 illustrates a flowchart of an example method according to some embodiments of the present disclosure;
Fig. 9 illustrates a simplified block diagram of a device that is suitable for implementing example embodiments of the present disclosure; and
FIG. 10 illustrates a block diagram of an example computer readable medium in accordance with example embodiments of the present disclosure.

Throughout the drawings, the same or similar reference numerals represent the same or similar element.

### DETAILED DESCRIPTION

Principle of the present disclosure will now be described with reference to some example embodiments. The invention is defined by the appended claims.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

As used herein, a measurement is defined as a "CSI-RS based intra-frequency measurement" or "intra-frequency measurement" for short if one or more of the following is satisfied: the subcarrier spacing (SCS) of CSI-RS resources on the neighbor cell configured for measurement is the same as the subcarrier spacing of CSI-RS resource on the serving cell indicated for measurement; the cyclic prefix (CP) type of CSI-RS resources on neighbor cell configured for measurement is the same as the CP type of CSI-RS resources on the serving cell indicated for measurement; and the center frequency of CSI-RS resources on the neighbor cell configured for measurement is the same as center frequency of CSI-RS resource on the serving cell indicated for measurement. Otherwise, the measurement is defined as a "CSI-RS based inter-frequency measurement" or "inter-frequency measurement" for short.

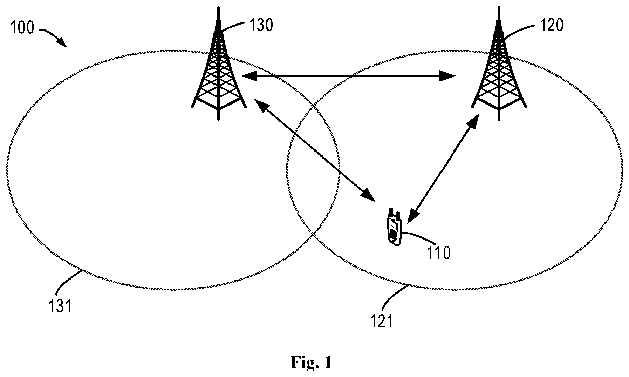

Fig. 1 illustrates an example communication environment 100 in which embodiments of the present disclosure can be implemented. As shown in Fig. 1, the environment 100 includes a first device 110, a second device 120 and a third device 130. In some example embodiments, the first device 110 may be a terminal device, the second device 120 may be a network device serving the first device 110, and the third device 130 may be a network device neighboring the second device 120. The second device 120 provides a cell 121 for the first device 110, which may be referred to as a serving cell 121. The third device 130 provides a cell 131 for the first device 110, which may be also referred to as a target cell 131. In some example embodiments, the target cell 130 is a neighbor cell.

It is to be understood that the number and type of first, second and third devices as shown in Fig. 1 are only for the purpose of illustration without suggesting any limitations. The environment 100 may include any suitable number and type of first, second and third devices adapted for implementing embodiments of the present disclosure. For example, in some other example embodiments, the third device may be absent and both the target cell 131 and the serving cell 121 are provided by the second device 120.

As shown in Fig. 1, the first, second and third devices 110, 120 and 130 may communicate with each other. For example, the second device 120 and the third device 130 may transmit reference signals (for example, CSI-RS) on predetermined resources, and the first device 110 may receive the reference signals based on configuration information about the predetermined resources. Further, the first device 110 may measure the reference signals and transmit the measurement results to the second device 120.

Communications in the communication environment 100 may be implemented according to any proper communication protocol(s), comprising, but not limited to, cellular communication protocols of the first generation (1G), the second generation (2G), the third generation (3G), the fourth generation (4G) and the fifth generation (5G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

The second device 120 may configure the first device 110 to measure at least a CSI-RS from the target cell 131. In some example embodiments, the second device 120 may configure the first device 110 to measure CSI-RSs from a set of cells including the target cell 131. In the following, such cells may be collectively referred to as "cells to be measured" or individually referred to as "a cell to be measured".

The measurement requirements for CSI-RS based L3 measurement include, for example, the aspects of CSI-RS measurement bandwidth for minimum requirements, CSI-RS based intra-frequency and inter-frequency definitions, intra-frequency and inter-frequency measurement requirements, accuracy evaluation and specification, additional UE measurement capability, including the number of frequency layers and the number of cells, and the performance requirements. Moreover, in the aspect of assumptions on synchronization, single Fast Fourier Transform (FFT) may be assumed for multiple cell measurements per frequency layer for both intra-frequency and inter-frequency measurements in some scenarios.

Currently, the information element (IE) *CSI-RS-ResourceConfigMobility* is used to configure CSI-RS based L3 measurements. The network may configure the UE to perform L3 CSI-RS for mobility by configuring the UE with the IE *CSI-RS-ResourceConfigMobility.* This IE may be included into the MeasObjectNR which is carrier specific. Hence, the network may configure CSI-RS for L3 mobility for one or more carriers. The IE *CSI-RS-ResourceConfigMobility* indicates the CSI-RS resources to be measured in respective cell(s) on a given carrier, and each CSI-RS resource is identified by an index.

If *associatedSSB* is configured, the UE shall base the timing of the CSI-RS resource indicated in *CSI-RS-Resource-Mobility* on the timing of the cell indicated by the *cellId* in the *CSI-RS-CellMobility.* In this case, the UE needs to detect the cell (SS/PBCH block) indicated by this *associatedSSB* and *cellId* before it can measure the associated CSI-RS.

As the configuration options are very flexible, it was agreed to define requirements for the CSI-RS based measurement in Rel16 with a limited scope. The requirements will be defined in Rel16 only when *associatedSSB* is configured and detected. The motivation is to not limit the overall use of CSI-RS based measurement for L3 mobility only to synchronized scenarios.

When the *associatedSSB* is configured, the UE is not required to measure the associated CSI-RS resource for L3 mobility before the SS/PBCH block indicated by this *associatedSSB* and *cellId* has been detected. Hence, the UE needs to detect the *associatedSSB* to get the timing information of the target cell, before it can perform measurements on the corresponding CSI-RS resources (for L3 measurements). The target cell to be measured may or may not be synchronized with the serving cell.

However, as mentioned above, there are synchronization assumptions of single FFT. That is, a single FFT is used by the UE to enable simultaneous processing of the CSI-RSs (for L3 measurements) from multiple neighbor cells on one carrier.

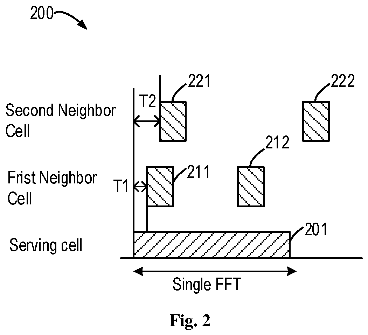

If there is no synchronization assumed among the cells, there could be timing difference between the CSI-RS resources to be measured at the UE and the timing of the single FFT. This would complicate the use of the single FFT on UE side for performing the necessary measurements. For example, Fig. 2 illustrates a schematic diagram 200 of timing difference among different cells. In the example shown in Fig. 2, the UE may apply the single FFT within a window 201. Under the above assumption on synchronization, the UE may apply the single FFT to decode CSI-RS 211 and CSI-RS 212 from the first neighbor cell as well as the CSI-RS 221 and CSI-RS 222 from the second neighbor cell.

For the intra-frequency CSI-RS based measurement, it can be assumed that the UE is using timing of the serving cell for the single FFT. As shown in Fig. 2, there may be a timing difference T1 between a serving cell and the first neighbor cell. There may be a different timing difference T2 between the serving cell and the second neighbor cell. The CSI-RS measurement performance may be degraded if the timing difference exceeds a certain threshold, such as length of a number of CPs.

Degradation of the CSI-RS measurement performance due to the timing difference may concern several aspects. One aspect is the cell phase synchronization accuracy on the network side, i.e., how well the cells are synchronized on the network side. Currently, 3rd Generation Partnership Project (3GPP) has defined maximum 3us cell phase synchronization accuracy in TS 38.133. Another aspect is the impact from the downlink (DL) transmission delays from the network to the UE from the different cells. Such DL transmission delay will also impact the cell synchronization as observed on the UE side and whether the cells to be measured are seen as being well synchronized or not. Such DL transmission delay is unknown on the network side as well as the UE side, and cannot be set as a fixed value as it depends on the air interface and channel conditions.

Therefore, the impact due to the timing difference needs to be considered under the single FFT assumption. However, none of the existing solutions addressed the synchronization problem from UE measurement point of view. A solution how to address the CSI-RS measurements and the related UE behavior concerning the CSI-RS measurements and reporting of the CSI-RS measurements is needed.

In accordance with some example embodiments of the present disclosure, there is provided a solution for handling CSI-RS based L3 measurement. In this solution, a first device determines first timing of a CSI-RS from a target cell. The first device is configured by a second device to measure the CSI-RS from the target cell. Then, the first device determines second timing used by the first device to measure the CSI-RS. Afterwards, the first device determines a timing difference between the first timing and the second timing. The first device transmits, to the second device and based on the timing difference, information concerning measurement of the CSI-RS, which may be referred to as CSI-RS measurement in the following. As used herein, the expression "measure the CSI-RS" and its variants mean performing measurement on the CSI-RS resources.

In this solution, behavior of a terminal device (e.g., a UE) with respect to CSI-RS measurement is specified based on the timing difference, e.g. the timing difference observed at the UE. This solution can reduce the impact due to large timing difference specifically under the assumption of the single FFT on UE side. In this way, degradation of the reported CSI-RS measurement can be known or avoided on the network side, when/if the synchronization problem of the CSI-RS measurement happens.

In some example embodiments, if the timing difference is below a threshold, the first device may perform measurement of the CSI-RS and report a result of the CSI-RS measurement to the second device. If the timing difference exceeds the threshold, the first device may not perform the CSI-RS measurement and indicate to the second device that the CSI-RS cannot or has not be measured due to the timing difference exceeding the threshold. Alternatively, if the timing difference exceeds the threshold, the first device may keep monitoring the timing difference. If the timing difference becomes below the threshold, the first device may perform the CSI-RS measurement.

In such example embodiments, it is ensured that the reported result of the CSI-RS measurement by the first device has the qualified accuracy. Unnecessary CSI-RS measurement effort can be reduced or even avoided at the first device (for example, on UE side) if the timing difference is large. Additionally, the indication to the second device (for example, a network device) can help the second device understand the problem and not configure the measurement on the target cell. Additionally, it can help the second device knowing the quality or accuracy of the reported measurements from the first device.

In some example embodiments, the first device may perform the CSI-RS measurement and report the result of the CSI-RS measurement regardless of whether the timing difference exceeds the threshold or not. In this case, the first device may further indicate the second device of whether the timing difference exceeds the threshold or not, e.g. in the measurement results, in the measurement report or using some other separate message.

In such example embodiments, the result of the CSI-RS measurement is reported to the second device along with an indication of whether the timing difference exceeds the threshold. In this way, the second device (for example, a network device) can be aware of whether the reported result is accurate or not. For example, the reported results may hold a specific value or indication indicating the whether the reported results are accurate or not.

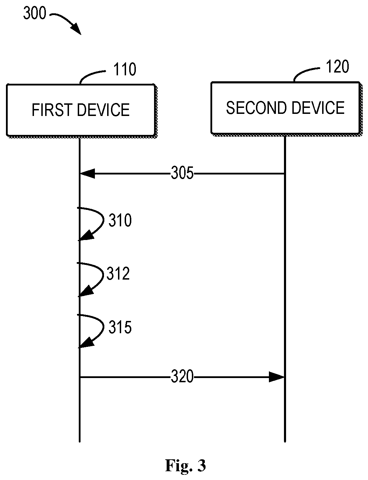

Some example embodiments are now detailed below. Fig. 3 illustrates a flowchart illustrating an example process 300 for handling CSI-RS measurement according to some embodiments of the present disclosure. For the purpose of discussion, the process 300 will be described with reference to Fig. 1. The process 300 at least involves the first device 110 and the second device 120 as shown in Fig.1.

As illustrated, the second device 120 configures 305 the first device 110 to measure a CSI-RS from the target cell 131, which may be referred to as "target CSI-RS". The second device 120 may transmit configuration about the CSI-RS measurement to the first device 110. The configuration about the CSI-RS measurement may comprise an indication of an SSB associated with the configured CSI-RS, which may be also referred to as "an associated SSB". For example, the second device 120 may transmit to the first device 110 the IE *CSI-RS-ResourceConfigMobility* or other suitable IE, which may include an index of the associated SSB. In some example embodiments, in addition to the target cell 131, the second device 120 may configure the first device 110 to measure CSI-RS from one or more other cells.

The first device 110 determines 310 timing (also referred to as "first timing") of the CSI-RS from the target cell 131. The first timing may be DL timing of the target cell 131 and can be determined by any suitable manner. In an example, the first timing may be determined based on the associated SSB of the target cell 131. The associated SSB of the target cell 131 may be configured. For example, the index of the associated SSB may be included in the configuration about the CSI-RS measurement. The first device 110 may detect the associated SSB of the CSI-RS resource in the target cell 131 and determine the first timing based on the associated SSB. In this way, timing of the associated SSB and hence timing of the CSI-RS from the target cell 131 is determined.

The first device 110 determines 312 second timing used by the first device 110 to measure the CSI-RS. The second timing may be considered as reference timing used by the first device 110 in measuring the CSI-RS. For example, under the assumption of the single FFT, the second timing may be timing of the single FFT to be applied to decode the CSI-RS.

In some example embodiments, the first device 110 may determine the second timing based on timing information of the serving cell 121. For example, the second timing may be determined based on an SSB of the serving cell 121. If measurement of the target CSI-RS is an intra-frequency measurement, the second timing may be determined based on the SSB of the serving cell 121.

In some example embodiments, the first device 110 may determine a reference cell from a set of cells to be measured, which comprises the target cell 131. The second device 120 may have configured the first device 110 to measure CSI-RSs from the set of cells on a carrier. Then, the first device 110 may determine the second timing based on timing information of the reference cell. As an example, if measurement of the target CSI-RS is an inter-frequency measurement, the second timing, i.e. the timing used to measure the CSI-RS resources on a carrier may be determined based on timing of the reference cell to be measured rather than the serving cell 121. For example, the second timing may be determined based on an associated SSB of the reference cell.

In case of inter-frequency measurement, any suitable approach may be used to determine the second timing, for example, the timing of the single FFT under assumption of the single FFT. As an example, the first device 110 may determine the second timing based on timing of a cell with the highest signal strength among the set of cells. As another example, the first device 110 may determine the second timing based on timing of the first cell detected by the first device 110 in the set of cells. As a further example, the first device 110 may determine the second timing based on timing of a cell with the highest or lowest index among the set of cells. As a further example, the first device 110 may determine the second timing based on timing of a cell which is aligned with as many as other cells as possible. Alternatively, the first device 110 may determine the second timing by applying a timing offset to the timing of a cell so that as many as CSI-RS resources as possible are measured with a timing difference within a threshold.

Continuing with Fig. 3, the first device 110 determines 315 a timing difference between the first timing and the second timing. In some example embodiments, for example in the case of intra-frequency measurement, the timing difference between the first timing and the second timing may represent a timing difference between the serving cell 121 and the target cell 131. In these example embodiments, the first device 110 may determine the timing difference based on the SSB of the serving cell 121 and the associated SSB of the CSI-RS resource in the target cell 131.

In some other example embodiments, for example in the case of inter-frequency measurement, the timing difference between the first timing and the second timing may represent a timing difference between the target cell 131 and the reference cell determined from the set of cells to be measured. In these example embodiments, the first device 110 may determine the timing difference based on the associated SSB of the target cell 131 and an SSB of the reference cell.

The first device 110 transmits 320, to the second device 120 and based on the timing difference, information concerning measurement of the target CSI-RS. The specific content of the transmitted information may depend on whether timing difference requirement is fulfilled. For example, if the timing difference is below a threshold, the timing difference requirement is fulfilled. The threshold may be a CP, half of a CP, or a number of CPs for example.

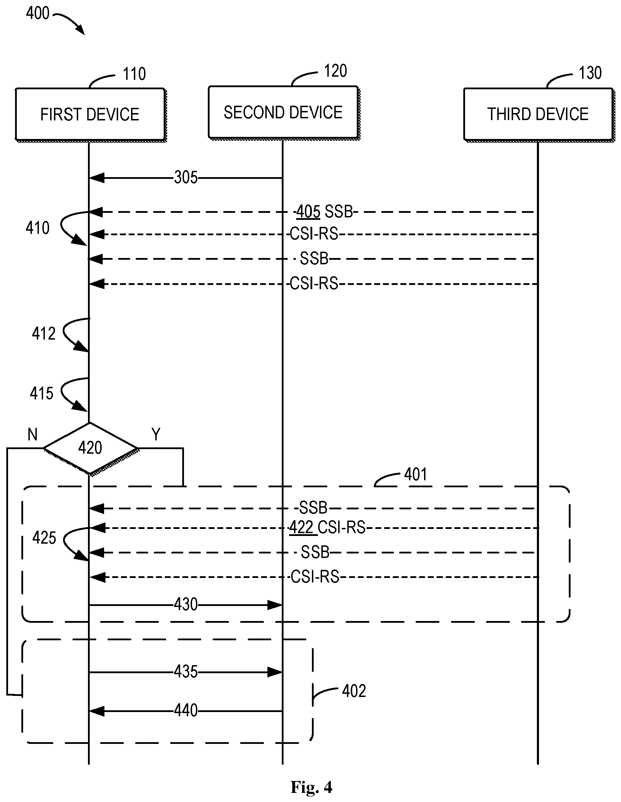

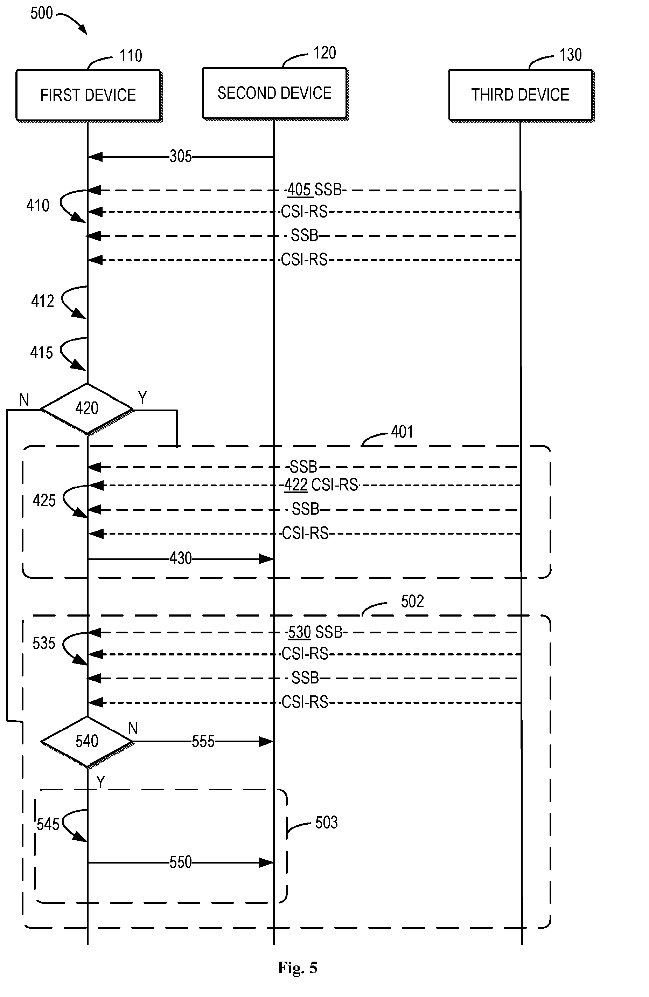

In some example embodiments, the first device 110 may determine, or the second device 120 may instruct the first device 110, whether to perform and report the measurement of the target CSI-RS based on whether the timing difference is below the threshold. For example, the first device 110 may perform the measurement of the target CSI-RS and report the measurement result only if the timing difference is below the threshold. If the timing difference exceeds the threshold, the first device 110 may not perform the measurement of the target CSI-RS and indicate the second device 120 of a failure in measuring the target CSI-RS. In other words, the first device 110 shall not measure or report measurement of CSI-RS from a cell for which the timing difference requirement is not fulfilled. Such example embodiments will be described in detail with reference to Figs. 4 and 5.

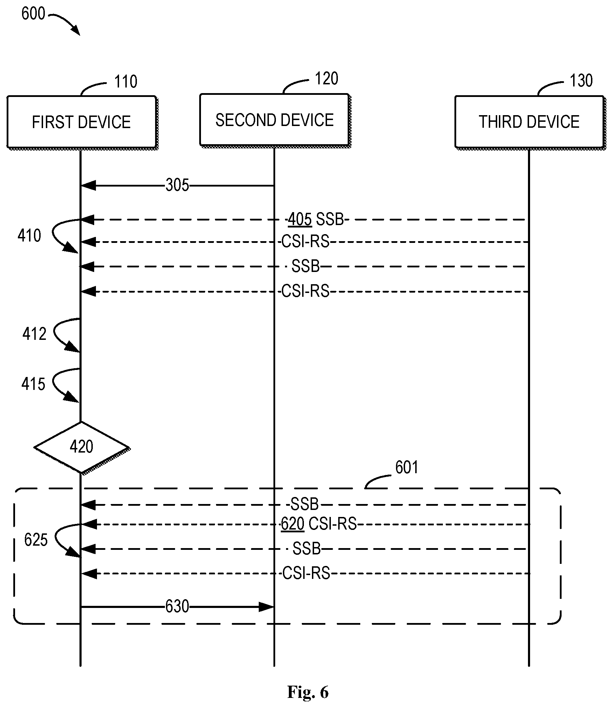

In some example embodiments, the first device 110 may perform, or be instructed by the second device 120 to perform, the measurement of the target CSI-RS and report the measurement results regardless of whether the timing difference exceeds the threshold. In such example embodiments, the first device 110 may further indicate the second device 120 of whether the timing difference exceeds the threshold. Such example embodiments will be described in detail with reference to Fig. 6.

Fig. 4 illustrates a flowchart illustrating an example process 400 for handling CSI-RS measurement according to some example embodiments of the present disclosure. The example process 400 may be considered as a specific implementation of the process 300. The process 400 at least involves the first device 110, the second device 120 and the third device 130 as shown in Fig.1. As shown in Fig. 4, in the process 400, the third device 130 may transmit SSB (for example, including the associated SSB) and CSI-RS (for example, the target CSI-RS) from the target cell 131 to the first device 110.

As illustrated, the second device 120 configures 305 the first device 110 to measure the target CSI-RS from the target cell 131 provided by the third device 130. The first device 110 detects 410 the associated SSB 405 for the target CSI-RS to obtain the timing of the target cell 131. In this way, the first timing of the target CSI-RS is determined to be the timing of the associated SSB i.e. the timing of the target cell 131.

The first device 110 determines 412 the second timing used by the first device 110 to measure the CSI-RS. The second timing may be determined as described above with respect to act 312 of Fig. 3. For example, in the case of intra-frequency measurement, the second timing may be determined to be the timing of the serving cell 121, e.g., based on the SSB of the serving cell 121. In the case of inter-frequency measurement, the second timing may be determined to be the timing of the reference cell from the set of cells to be measured. For example, the second timing may be determined based on the SSB of the reference cell.

The first device 110 determines 415 a timing difference between the first timing and the second timing. The timing difference may be determined as described above with reference to Fig. 3. For example, in the case of intra-frequency measurement, the first device 110 may determine the timing difference based on the associated SSB of the target cell 131 and the SSB of the serving cell 121. In the case of inter-frequency measurement, the first device 110 may determine the timing difference based on the associated SSB of the target cell 131 and the SSB of the reference cell.

At block 420, the first device 110 determines whether the timing difference is below the threshold. If the timing difference is below the threshold, the process 400 proceeds to the block 401. As shown, the first device 110 may measure 425 the CSI-RS 422 from the target cell 131 provided by the third device 130. In other words, the first device 110 may perform measurement of the CSI-RS 422. Then, the first device 110 may transmit 430 a result of the measurement of the CSI-RS 422 to the second device 120. For example, the first device 110 may transmit a measurement report to the second device 120. Therefore, the result of the CSI-RS measurement received at the second device can have a qualified accuracy. Performance of the CSI-RS measurement can thus be ensured.

If at block 420, the first device 110 determines that the timing difference exceeds the threshold, the process 400 proceeds to the block 402. As shown, the first device 110 may transmit 435 to the second device 120 an indication that the CSI-RS from the target cell 131 cannot be measured or cannot be measured with the qualified accuracy, due to the timing difference exceeding the threshold. Only for purpose of illustration without any limitation to the scope of present discourse, such an indication may be referred to hereinafter as "failure indication". The failure indication may indicate the second device 120 of a failure in measuring the CSI-RS from the target cell 131. After receiving the failure indication, the second device1 120 may de-configure the CSI-RS measurement on the target cell 131. For example, the second device 120 may transmit 440 to the first device 110 an indication (also referred to as "configuration indication") to disable the measurement of the CSI-RS from the target cell 131.

Fig. 5 illustrates a flowchart illustrating an example process 500 for handling CSI-RS measurement according to some embodiments of the present disclosure. The example process 500 may be considered as a specific implementation of the process 300. The process 500 at least involves the first device 110, the second device 120 and the third device 130 as shown in Fig.1. As shown in Fig. 5, in the process 500, the third device 130 may transmit SSB (for example, including the associated SSB) and CSI-RS (for example, the target CSI-RS) from the target cell 131 to the first device 110. Only differences between the process 400 and the process 500 are described.

If at block 420, the first device 110 determines that the timing difference exceeds the threshold, the process 500 proceeds to the block 502. Instead of immediately indicating the second device 120 of failure in the CSI-RS measurement, the first device 110 may keep tracking of the timing difference. As shown in Fig. 5, at block 502, the first device 110 may keep tracking of the timing of the target cell 131 for a time period. For example, a timer may be started upon determining that the timing difference exceeds the threshold. If the timing difference goes below the threshold within the time period or before the timer expires, the first device 110 may perform the measurement of the CSI-RS from the target cell 131 and report the measurement results to the second device 120. If the timing difference still exceeds the threshold till the end of the time period, the first device 110 may indicate to the second device 120 that the target CSI-RS and/or the target cell 131 cannot be measured or cannot be measured with the qualified accuracy.

As shown, the first device 110 may detect 535 an associated SSB 530 from the target cell 131 to obtain an updated first timing. In other words, an updated timing of the target cell 131 may be obtained. As such, the first device 110 may update the timing difference based on the updated first timing and the second timing. At block 540, the first device 110 may determine whether the updated timing difference falls below the threshold. If the updated timing difference falls below the threshold within the time period or before the timer expires, the process 500 proceeds to the block 503. The first device 110 may measure 545 the CSI-RS from the target cell 131. In other words, the first device 110 may perform measurement of the CSI-RS. Then, the first device 110 may transmit 550 a result of the measurement of the CSI-RS to the second device 120. For example, the first device 110 may transmit a measurement report to the second device 120. Therefore, the result of the CSI-RS measurement received at the second device 120 can have a qualified accuracy. Performance of the CSI-RS measurement can thus be ensured.

If at block 540, the first device 110 determines that the timing difference still exceeds the threshold till the end of the time period, the first device 110 may transmit 555 to the second device 120 a failure indication that the CSI-RS from the target cell 131 cannot be measured or cannot be measure with the qualified accuracy, due to the timing difference exceeding the threshold. The failure indication may indicate the second device 120 of a failure in measuring the CSI-RS from the target cell 131. Although not shown, the second device 120 may de-configure the CSI-RS measurement on the target cell 131 after receiving the failure indication. For example, the second device 120 may transmit to the first device 110 the configuration indication to disable the measurement of the CSI-RS from the target cell 131.

In the above example embodiments described with reference to Figs. 4 and 5, the principle is to measure the configure CSI-RS from the target cell based on the timing difference. For example, for the intra-frequency measurement, based on the timing difference between the serving cell and the target cell, the first device (for example, the UE) is only required to measure the configured CSI-RS for L3, if the timing difference is below the defined threshold. Otherwise, the first device is not required to measure the CSI-RS for L3 from the target cell. The first device shall not report any measurement of L3 CSI-RS from cells for which the timing difference requirement is not fulfilled.

In such example embodiments, the accuracy of the reported result of the CSI-RS measurement can be ensured. Unnecessary effort for CSI-RS measurement can be avoided at the first device (for example, on UE side) if the timing difference is large. Additionally, the indication to the second device (for example, a network device) can help the second device understand the problem and not configure the measurement on the target cell.

Fig. 6 illustrates a flowchart illustrating an example process 600 for handling CSI-RS measurement according to some embodiments of the present disclosure. The example process 600 may be considered as a specific implementation of the process 300. The process 600 at least involves the first device 110, the second device 120 and the third device 130 as shown in Fig.1. As shown in Fig. 6, in the process 600, the third device 130 may transmit SSB (for example, including the associated SSB) and CSI-RS (for example, the target CSI-RS) from the target cell 131 to the first device 110. Only differences between the process 400 and the process 600 are described.

At block 420, the first device 110 determines whether the timing difference is below the threshold. Then, the process 600 proceeds to block 601. As shown, the first device 110 may measure 625 the CSI-RS 620 from the target cell 131 provided by the third device 130. In other words, the first device 110 may perform measurement of the CSI-RS 620. Then, the first device 110 may transmit 630 to the second device 120 a result of the measurement of the CSI-RS 620 and an indication (also referred to as "timing indication") of whether the timing difference is below the threshold. For example, the first device 110 may transmit a measurement report to the second device 120. The first device 110 may add a specific value into the measurement report. The specific value may implicitly indicate that the CSI-RS is measured without fulfilling the timing difference threshold or with a problematic timing difference. Alternatively, the first device 110 may transmit the measured results, and additionally an indication that the CSI-RS is measured without fulfilling the timing difference threshold or with a problematic timing difference. In this way, the second device (for example, a network device) can be aware of whether the reported result is accurate or not. In some example embodiments, if the timing indication indicates that the timing difference exceeds the threshold, the second device 120 may de-configure the CSI-RS measurement on the target cell 131. For example, the second device 120 may transmit to the first device 110 the configuration indication to disable the measurement of the CSI-RS from the target cell 131.

In the example processes 400, 500 and 600, the second device 120 and the third device 130 are shown separately. In some example embodiments, the second device 120 and the third device 130 may be the same and the acts described with respect to the second device 120 may be performed in the serving cell and the acts described with respect to the third device 130 may be performed in another cell.

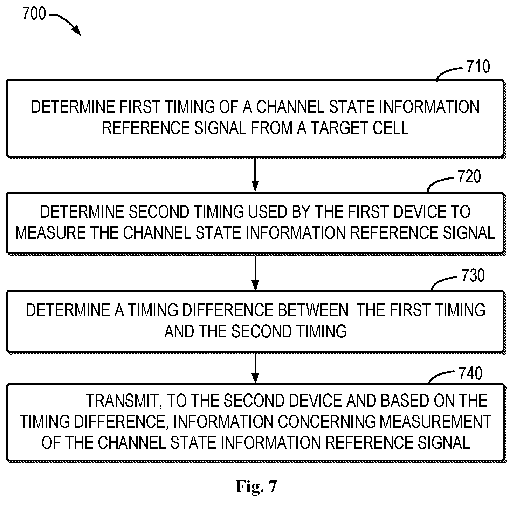

Fig. 7 shows a flowchart of an example method 700 implemented at a first device 110 in accordance with some example embodiments of the present disclosure. For the purpose of discussion, the method 700 will be described from the perspective of the first device 110 with respect to Fig. 1.

At block 710, the first device 110 determines first timing of a channel state information reference signal from a target cell. The first device 110 is configured by a second device 120 to measure the channel state information reference signal. In some example embodiments, the first device 110 may detect a synchronization signal block of the target cell associated with the channel state information reference signal; and determine the first timing based on the synchronization signal block.

At block 720, the first device 110 determines second timing used by the first device 110 to measure the channel state information reference signal. In some example embodiments, the first device 110 may determine the second timing based on timing information of a serving cell 121 provided by the second device 120.

In some example embodiments, the first device 110 may determine a cell from a set of cells comprising the target cell. The first device 100 is configured to measure channel state information reference signals from the set of cells. The first device 110 may determine the second timing based on timing information of the determined cell.

At block 730, the first device 110 determines a timing difference between the first timing and the second timing. At block 740, based on the timing difference, the first device 110 transmits information concerning measurement of the channel state information reference signal to the second device 120.

In some example embodiments, if the timing difference is below a threshold, the first device 110 may perform the measurement of the channel state information reference signal; and transmit a result of the measurement to the second device 120.

In some example embodiments, if the timing difference exceeds a threshold, the first device 110 may transmit to the second device 120 an indication that the timing difference exceeds the threshold. In some example embodiments, the first device 110 may receive, from the second device 120, a configuration indication to disable the measurement of the channel state information reference signal.

In some example embodiments, if the timing difference exceeds a threshold, the first device 110 may obtain updated first timing from the target cell; update the timing difference based on the updated first timing and the second timing. If the updated timing difference falls below the threshold within a time period, the first device 110 may perform the measurement of the channel state information reference signal; and transmit a result of the measurement to the second device 120. In some example embodiments, if the updated timing difference exceeds the threshold for the time period, the first device 110 may transmit to the second device 120 an indication that the time difference exceeds the threshold. In some example embodiments, the first device 110 may further receive, from the second device 120, a configuration indication to disable the measurement of the channel state information reference signal.

In some example embodiments, the first device 110 may perform the measurement of the channel state information reference signal; and transmit a result of the measurement and a timing indication of whether the timing difference exceeds a threshold to the second device 120. In some example embodiments, the timing indication may indicate the timing difference exceeding the threshold. The first device 110 may receive, from the second device 120, a configuration indication to disable the measurement of the channel state information reference signal.

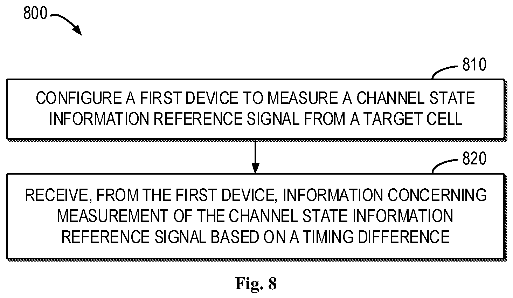

Fig. 8 shows a flowchart of an example method 800 implemented at a second device in accordance with some example embodiments of the present disclosure. For the purpose of discussion, the method 800 will be described from the perspective of the second device 120 with respect to Fig. 1.

At block 810, the second device 120 configures a first device 110 to measure a channel state information reference signal from a target cell. At block 820, the second device 120 receives, from the first device 110, information concerning measurement of the channel state information reference signal based on a timing difference between first timing of the channel state information reference signal and second timing used by the first device 110 to measure the channel state information reference signal.

In some example embodiments, the second device 120 may receive a result of the measurement from the first device 110.

In some example embodiments, the second device 120 may receive, from the first device 110, an indication that the timing difference exceeds a threshold. In some example embodiments, the second device 120 may transmit, to the first device 110, a configuration indication to disable the measurement of the channel state information reference signal.

In some example embodiments, the second device 120 may receive, from the first device 110, a result of the measurement and a timing indication of whether the timing difference exceeds a threshold.

In some example embodiments, if the timing indication indicates the timing difference exceeding the threshold, the second device 120 may transmit to the first device 110 a configuration indication to disable the measurement of the channel state information reference signal.

In some example embodiments, a first apparatus capable of performing any of the method 700 (for example, the first device 110) may comprise means for performing the respective operations of the method 700. The means may be implemented in any suitable form. For example, the means may be implemented in a circuitry or software module. The first apparatus may be implemented as or included in the first device 110.

In some example embodiments, the first apparatus comprises means for determining first timing of a channel state information reference signal from a target cell, the first apparatus configured by a second apparatus to measure the channel state information reference signal; means for determining second timing used by the first apparatus to measure the channel state information reference signal; means for determining a timing difference between the first timing and the second timing; and means for transmitting, to the second apparatus and based on the timing difference, information concerning measurement of the channel state information reference signal.

In some example embodiments, the means for determining first timing comprises means for detecting a synchronization signal block of the target cell associated with the channel state information reference signal; and means for determining the first timing based on the synchronization signal block.

In some example embodiments, the means for determining second timing comprises means for determining the second timing based on timing information of a serving cell provided by the second apparatus.

In some example embodiments, the means for determining second timing comprises means for determining a cell from a set of cells comprising the target cell, the first apparatus configured to measure channel state information reference signals from the set of cells; and means for determining the second timing based on timing information of the determined cell.

In some example embodiments, the means for transmitting the information comprises means for in accordance with a determination that the timing difference is below a threshold, performing the measurement of the channel state information reference signal; and means for transmitting a result of the measurement to the second apparatus.

In some example embodiments, the means for transmitting the information comprises means for in accordance with a determination that the timing difference exceeds a threshold, transmitting to the second apparatus an indication that the timing difference exceeds the threshold. In some example embodiments, the first apparatus further comprises means for receiving, from the second apparatus, a configuration indication to disable the measurement of the channel state information reference signal.

In some example embodiments, the means for transmitting the information comprises means for in accordance with a determination that the timing difference exceeds a threshold, obtaining updated first timing from the target cell; means for updating the timing difference based on the updated first timing and the second timing; means for in accordance with a determination that the updated timing difference falls below the threshold within a time period, performing the measurement of the channel state information reference signal; and means for transmitting a result of the measurement to the second apparatus. In some example embodiments, the first apparatus further comprises means for in accordance with a determination that the updated timing difference exceeds the threshold for the time period, transmitting to the second apparatus an indication that the time difference exceeds the threshold. In some example embodiments, the first apparatus further comprises means for receiving, from the second apparatus, a configuration indication to disable the measurement of the channel state information reference signal.

In some example embodiments, the means for transmitting the information comprises means for performing the measurement of the channel state information reference signal; and means for transmitting, to the second apparatus, a result of the measurement and a timing indication of whether the timing difference exceeds a threshold. In some example embodiments, the timing indication may indicate the timing difference exceeding the threshold. The first apparatus further comprises means for receiving, from the second apparatus, a configuration indication to disable the measurement of the channel state information reference signal.

In some example embodiments, the second apparatus comprises means for configuring a first apparatus to measure a channel state information reference signal from a target cell; and means for receiving, from the first apparatus, information concerning measurement of the channel state information reference signal based on a timing difference between first timing of the channel state information reference signal and second timing used by the first apparatus to measure the channel state information reference signal.

In some example embodiments, the means for receiving the information comprises means for receiving a result of the measurement from the first apparatus.

In some example embodiments, the means for receiving the information comprises means for receiving, from the first apparatus, an indication that the timing difference exceeds a threshold. In some example embodiments, the second apparatus further comprises means for transmitting, to the first apparatus, a configuration indication to disable the measurement of the channel state information reference signal.

In some example embodiments, the means for receiving the information comprises means for receiving, from the first apparatus, a result of the measurement and a timing indication of whether the timing difference exceeds a threshold. In some example embodiments, the second apparatus further comprises means for in accordance with a determination that the timing indication indicates the timing difference exceeding the threshold, transmitting to the first apparatus a configuration indication to disable the measurement of the channel state information reference signal.

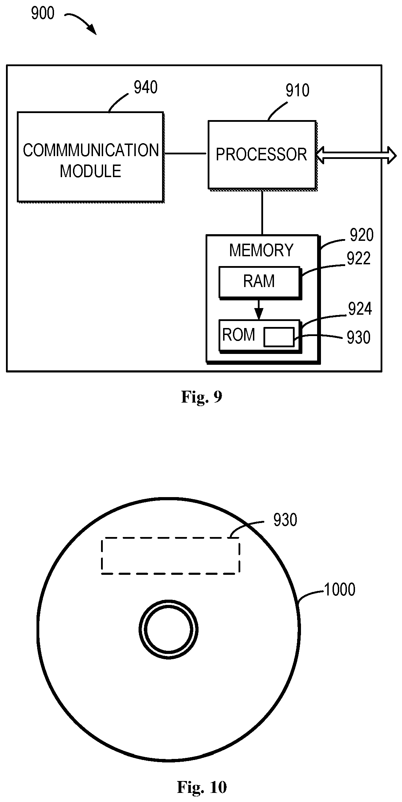

Fig. 9 is a simplified block diagram of a device 900 that is suitable for implementing embodiments of the present disclosure. The device 900 may be provided to implement a communication device, for example, the first device 110, the second device 120 and the third device 130 as shown in Fig. 1. As shown, the device 900 includes one or more processors 910, one or more memories 920 coupled to the processor 910, and one or more communication modules 940 (such as, transmitters and/or receivers) coupled to the processor 910.

The communication module 940 is for bidirectional communications. The communication module 940 has at least one antenna to facilitate communication. The communication interface may represent any interface that is necessary for communication with other network elements.

The processor 910 may be of any type suitable to the local technical network and may include one or more of the following: general purpose computers, special purpose computers, microprocessors, digital signal processors (DSPs) and processors based on multicore processor architecture, as non-limiting examples. The device 1200 may have multiple processors, such as an application specific integrated circuit chip that is slaved in time to a clock which synchronizes the main processor.

The memory 920 may include one or more non-volatile memories and one or more volatile memories. Examples of the non-volatile memories include, but are not limited to, a Read Only Memory (ROM) 924, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 922 and other volatile memories that will not last in the power-down duration.

A computer program 930 includes computer executable instructions that are executed by the associated processor 910. The program 930 may be stored in the ROM 920. The processor 910 may perform any suitable actions and processing by loading the program 930 into the RAM 920.

The embodiments of the present disclosure may be implemented by means of the program 930 so that the device 900 may perform any process of the disclosure as discussed with reference to Figs. 7 to 8. The embodiments of the present disclosure may also be implemented by hardware or by a combination of software and hardware.

In some embodiments, the program 930 may be tangibly contained in a computer readable medium which may be included in the device 900 (such as in the memory 920) or other storage devices that are accessible by the device 900. The device 900 may load the program 930 from the computer readable medium to the RAM 922 for execution. The computer readable medium may include any types of tangible non-volatile storage, such as ROM, EPROM, a flash memory, a hard disk, CD, DVD, and the like. Fig. 10 shows an example of the computer readable medium 1000 in form of CD or DVD. The computer readable medium has the program 930 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 700 or 800 as described above with reference to Figs. 7-8. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims. The invention is defined by the appended claims.

## Claims

1. A first device comprising:
at least one processor; and
at least one memory including computer program codes;
the at least one memory and the computer program codes are configured to, with the at least one processor, cause the first device at least to:
determine first timing of a channel state information reference signal from a target cell, the first device configured by a second device to measure the channel state information reference signal;
determine second timing used by the first device to measure the channel state information reference signal;
determine a timing difference between the first timing and the second timing; and
transmit, to the second device and based on the timing difference, information concerning measurement of the channel state information reference signal, wherein the at least one memory and the computer program codes are configured to, with the at least one processor, cause the first device to transmit the information by:
in accordance with a determination that the timing difference exceeds a threshold, transmitting to the second device an indication that the timing difference exceeds the threshold.

2. The first device of Claim 1, wherein the at least one memory and the computer program codes are configured to, with the at least one processor, cause the first device to determine the first timing by:
detecting a synchronization signal block of the target cell associated with the channel state information reference signal; and
determining the first timing based on the synchronization signal block.

3. The first device of Claim 1 or 2, wherein the at least one memory and the computer program codes are configured to, with the at least one processor, cause the first device to determine the second timing by:
determining the second timing based on timing information of a serving cell provided by the second device.

4. The first device of Claim 1 or 2, wherein the at least one memory and the computer program codes are configured to, with the at least one processor, cause the first device to determine the second timing by:
determining a cell from a set of cells comprising the target cell, the first device configured to measure channel state information reference signals from the set of cells; and
determine the second timing based on timing information of the determined cell.

5. The first device of Claim 1, wherein the at least one memory and the computer program codes are configured to, with the at least one processor, cause the first device to transmit the information by:
in accordance with a determination that the timing difference is below a threshold, performing the measurement of the channel state information reference signal; and
transmitting a result of the measurement to the second device.

6. The first device of Claim 1, wherein the at least one memory and the computer program codes are configured to, with the at least one processor, cause the first device to transmit the information by:
in accordance with a determination that the timing difference exceeds a threshold, obtaining updated first timing from the target cell;
updating the timing difference based on the updated first timing and the second timing;
in accordance with a determination that the updated timing difference falls below the threshold within a time period, performing the measurement of the channel state information reference signal; and
transmitting a result of the measurement to the second device.

7. The first device of Claim 6, wherein the at least one memory and the computer program codes are configured to, with the at least one processor, further cause the first device:
in accordance with a determination that the updated timing difference exceeds the threshold for the time period, transmit to the second device an indication that the time difference exceeds the threshold.

8. The first device of Claim 1 or 7, wherein the at least one memory and the computer program codes are configured to, with the at least one processor, further cause the first device to:
receive, from the second device, a configuration indication to disable the measurement of the channel state information reference signal.

9. The first device of Claim 1, wherein the at least one memory and the computer program codes are configured to, with the at least one processor, cause the first device to transmit the information by:
performing the measurement of the channel state information reference signal; and
transmitting, to the second device, a result of the measurement and a timing indication of whether the timing difference exceeds a threshold.

10. The first device of Claim 9, wherein the timing indication indicates the timing difference exceeding the threshold, and
wherein the at least one memory and the computer program codes are configured to, with the at least one processor, further cause the first device to:
receive, from the second device, a configuration indication to disable the measurement of the channel state information reference signal.

11. A second device comprising:
at least one processor; and
at least one memory including computer program codes;
the at least one memory and the computer program codes are configured to, with the at least one processor, cause the second device at least to:
configure a first device to measure a channel state information reference signal from a target cell; and
receive, from the first device, information concerning measurement of the channel state information reference signal based on a timing difference between first timing of the channel state information reference signal and second timing used by the first device to measure the channel state information reference signal, wherein the at least one memory and the computer program codes are configured to, with the at least one processor, cause the second device to receive the information by:
receiving, from the first device, an indication that the timing difference exceeds a threshold.

12. The second device of Claim 11, wherein the at least one memory and the computer program codes are configured to, with the at least one processor, cause the second device to receive the information by:
receiving a result of the measurement from the first device.

13. The second device of Claim 11, wherein the at least one memory and the computer program codes are configured to, with the at least one processor, further cause the second device to:
transmit to the first device a configuration indication to disable the measurement of the channel state information reference signal.

14. The second device of Claim 11, wherein the at least one memory and the computer program codes are configured to, with the at least one processor, cause the second device to receive the information by:
receiving, from the first device, a result of the measurement and a timing indication of whether the timing difference exceeds a threshold.

15. The second device of Claim 14, wherein the at least one memory and the computer program codes are configured to, with the at least one processor, further cause the second device to:
in accordance with a determination that the timing indication indicates the timing difference exceeding the threshold, transmit to the first device a configuration indication to disable the measurement of the channel state information reference signal.

16. A method performed by a first device, the method comprising:
determining, at the first device, first timing of a channel state information reference signal from a target cell, the first device configured by a second device to measure the channel state information reference signal;
determining second timing used by the first device to measure the channel state information reference signal;
determining a timing difference between the first timing and the second timing; and
transmitting, to the second device and based on the timing difference, information concerning measurement of the channel state information reference signal by:
in accordance with a determination that the timing difference exceeds a threshold, transmitting to the second device an indication that the timing difference exceeds the threshold.

17. A method performed by a second device, the method comprising:
configuring, by the e second device, a first device to measure a channel state information reference signal from a target cell; and
receiving, from the first device, information concerning measurement of the channel state information reference signal based on a timing difference between first timing of the channel state information reference signal and second timing used by the first device to measure the channel state information reference signal by:
receiving, from the first device, an indication that the timing difference exceeds a threshold.

## Patentansprüche

1. Erste Vorrichtung, umfassend:
mindestens einen Prozessor; und
mindestens einen Speicher, umfassend Computerprogrammcodes;
der mindestens eine Speicher und die Computerprogrammcodes sind konfiguriert, um, mit dem mindestens einen Prozessor, die erste Vorrichtung mindestens zu veranlassen zum:
Bestimmen eines ersten Zeitpunktes eines Kanalzustandsinformations-Referenzsignals von einer Zielzelle, die erste Vorrichtung konfiguriert durch eine zweite Vorrichtung, um das Kanalzustandsinformations-Referenzsignal zu messen;
Bestimmen eines zweiten Zeitpunktes, der durch die erste Vorrichtung genutzt wird, um das Kanalzustandsinformations-Referenzsignal zu messen;
Bestimmen einer Zeitdifferenz zwischen dem ersten Zeitpunkt und dem zweiten Zeitpunkt;
und
Übertragen, zu der zweiten Vorrichtung und basierend auf der Zeitdifferenz, einer Information betreffend die Messung des Kanalzustandsinformations-Referenzsignals, wobei der mindestens eine Speicher und die Computerprogrammcodes konfiguriert sind, um, mit dem mindestens einen Prozessor, die erste Vorrichtung zu veranlassen, die Information zu übertragen durch:
gemäß einer Bestimmung, dass die Zeitdifferenz einen Schwellenwert überschreitet, Übertragen, zu der zweiten Vorrichtung, einer Indikation, dass die Zeitdifferenz den Schwellenwert überschreitet.

2. Erste Vorrichtung nach Anspruch 1, wobei der mindestens eine Speicher und die Computerprogrammcodes konfiguriert sind, um, mit dem mindestens einen Prozessor, die erste Vorrichtung zu veranlassen, den ersten Zeitpunkt zu bestimmen durch:
Detektieren eines Synchronisationssignalblocks der Zielzelle, die assoziiert ist mit dem Kanalzustandsinformations-Referenzsignals; und
Bestimmen des ersten Zeitpunktes basierend auf dem Synchronisationssignalblock.

3. Erste Vorrichtung nach Anspruch 1 oder 2, wobei der mindestens eine Speicher und die Computerprogrammcodes konfiguriert sind, um, mit dem mindestens einen Prozessor, die erste Vorrichtung zu veranlassen, den zweiten Zeitpunkt zu bestimmen durch:
Bestimmen des zweiten Zeitpunkts basierend auf einer Zeitinformation einer Serving-Zelle, bereitgestellt durch die zweite Vorrichtung.

4. Erste Vorrichtung nach Anspruch 1 oder 2, wobei der mindestens eine Speicher und die Computerprogrammcodes konfiguriert sind, um, mit dem mindestens einen Prozessor, die erste Vorrichtung zu veranlassen, den zweiten Zeitpunkt zu bestimmen durch:
Bestimmen einer Zelle aus einem Satz von Zellen, der die Zielzelle umfasst, die erste Vorrichtung konfiguriert die Kanalzustandsinformations-Referenzsignale von dem Satz von Zellen zu messen; und
Bestimmen des zweiten Zeitpunkts basierend auf der Zeitinformation der bestimmten Zelle.

5. Erste Vorrichtung nach Anspruch 1, wobei der mindestens eine Speicher und die Computerprogrammcodes konfiguriert sind, um, mit dem mindestens einen Prozessor, die erste Vorrichtung zu veranlassen, die Information zu übertragen durch:
gemäß einer Bestimmung, dass die Zeitdifferenz unter einem Schwellenwert ist, Durchführen der Messung des Kanalzustandsinformations-Referenzsignals; und
Übertragen eines Ergebnisses der Messung zu der zweiten Vorrichtung.

6. Erste Vorrichtung nach Anspruch 1, wobei der mindestens eine Speicher und die Computerprogrammcodes konfiguriert sind, um, mit dem mindestens einen Prozessor, die erste Vorrichtung zu veranlassen, die Information zu übertragen durch:
gemäß einer Bestimmung, dass die Zeitdifferenz einen Schwellenwert überschreitet, Erhalten eines aktualisierten ersten Zeitpunktes von der Zielzelle;
Aktualisieren der Zeitdifferenz basierend auf dem aktualisierten ersten Zeitpunkt und dem zweiten Zeitpunkt;
gemäß einer Bestimmung, dass die aktualisierte Zeitdifferenz unter den Schwellenwert innerhalb einer Zeitperiode fällt, Durchführen der Messung des Kanalzustandsinformations-Referenzsignals; und
Übertragen eines Ergebnisses der Messung zu der zweiten Vorrichtung.

7. Erste Vorrichtung nach Anspruch 6, wobei der mindestens eine Speicher und die Computerprogrammcodes konfiguriert sind, um, mit dem mindestens einen Prozessor, ferner die erste Vorrichtung zu veranlassen zum:
gemäß der Bestimmung, dass die aktualisierte Zeitdifferenz einen Schwellenwert für die Zeitperiode überschreitet, Übertragen, zu der zweiten Vorrichtung, einer Indikation, dass die Zeitdifferenz den Schwellenwert überschreitet.

8. Erste Vorrichtung nach Anspruch 1 oder 7, wobei der mindestens eine Speicher und die Computerprogrammcodes konfiguriert sind, um, mit dem mindestens einen Prozessor, ferner die erste Vorrichtung zu veranlassen zum:
Empfangen, von der zweiten Vorrichtung, eine Konfigurationsindikation, um die Messung des Kanalzustandsinformations-Referenzsignals zu deaktivieren.

9. Erste Vorrichtung nach Anspruch 1, wobei der mindestens eine Speicher und die Computerprogrammcodes konfiguriert sind, um, mit dem mindestens einen Prozessor, die erste Vorrichtung zu veranlassen, die Information zu übertragen durch:
Durchführen der Messung des Kanalzustandsinformations-Referenzsignals; und
Übertragen, zu der zweiten Vorrichtung, ein Ergebnis der Messung und eine Zeitindikation darüber, ob die Zeitdifferenz einen Schwellenwert überschreitet.

10. Erste Vorrichtung nach Anspruch 9, wobei die Zeitindikation die Zeitdifferenz indiziert, die den Schwellenwert überschreitet, und
wobei der mindestens eine Speicher und die Computerprogrammcodes konfiguriert sind, um, mit dem mindestens einen Prozessor, ferner die erste Vorrichtung zu veranlassen zum:
Empfangen, von der zweiten Vorrichtung, eine Konfigurationsindikation, um die Messung des Kanalzustandsinformations-Referenzsignals zu deaktivieren.

11. Zweite Vorrichtung umfassend;
mindestens einen Prozessor; und
mindestens einen Speicher umfassend Computerprogrammcodes;
der mindestens eine Speicher und die Computerprogrammcodes sind konfiguriert, um, mit dem mindestens einen Prozessor, das zweite Gerät zu veranlassen, mindestens zum:
Konfigurieren einer ersten Vorrichtung, um ein Kanalzustandsinformations-Referenzsignal von einer Zielzelle zu messen; und
Empfangen, von der ersten Vorrichtung, einer Information betreffend die Messung des Kanalzustandsinformations-Referenzsignals basierend auf einer Zeitdifferenz zwischen einem ersten Zeitpunkt eines Kanalzustandsinformations-Referenzsignals und einem zweiten Zeitpunkt, der durch die erste Vorrichtung genutzt wird, um das Kanalzustandsinformations-Referenzsignals zu messen, wobei der mindestens eine Speicher und die Computerprogrammcodes konfiguriert sind, um, mit dem mindestens einen Prozessor, die zweite Vorrichtung zu veranlassen, die Information zu empfangen
durch:
Empfangen, von der ersten Vorrichtung, einer Indikation, dass die Zeitdifferenz einen Schwellenwert überschreitet.

12. Zweite Vorrichtung nach Anspruch 11, wobei der mindestens eine Speicher und die Computerprogrammcodes konfiguriert sind, um, mit dem mindestens einen Prozessor, die zweite Vorrichtung zu veranlassen, die Information zu empfangen durch:
Empfangen eines Ergebnisses der Messung von der ersten Vorrichtung.

13. Zweite Vorrichtung nach Anspruch 11, wobei der mindestens eine Speicher und die Computerprogrammcodes konfiguriert sind, um, mit dem mindestens einen Prozessor, ferner die zweite Vorrichtung zu veranlassen zum:
Übertragen, zu der ersten Vorrichtung, einer Konfigurationsindikation, um die Messung des Kanalzustandsinformations-Referenzsignals zu deaktivieren.

14. Zweite Vorrichtung nach Anspruch 11, wobei der mindestens eine Speicher und die Computerprogrammcodes konfiguriert sind, um, mit dem mindestens einen Prozessor, die zweite Vorrichtung zu veranlassen, die Information zu empfangen durch:
Empfangen, von der ersten Vorrichtung, ein Ergebnis der Messung und eine Zeitindikation darüber, ob die Zeitdifferenz einen Schwellenwert überschreitet.

15. Zweite Vorrichtung nach Anspruch 14, wobei der mindestens eine Speicher und die Computerprogrammcodes konfiguriert sind, um, mit dem mindestens einen Prozessor, ferner die zweite Vorrichtung zu veranlassen zum:
gemäß einer Bestimmung, dass die Zeitindikation indiziert, dass die Zeitdifferenz den Schwellenwert überschreitet, Übertragen, zu der ersten Vorrichtung, einer Konfigurationsindikation, um die Messung des Kanalzustandsinformations-Referenzsignals zu deaktivieren.

16. Verfahren, durchgeführt durch eine erste Vorrichtung, das Verfahrenumfassend:
Bestimmen, an der ersten Vorrichtung, einen ersten Zeitpunkt eines Kanalzustandsinformations-Referenzsignals von einer Zielzelle, die erste Vorrichtung konfiguriert durch eine zweite Vorrichtung, um das Kanalzustandsinformations-Referenzsignal zu messen;
Bestimmen eines zweiten Zeitpunkts, der durch die erste Vorrichtung genutzt wird, um das Kanalzustandsinformations-Referenzsignal zu messen;
Bestimmen einer Zeitdifferenz zwischen dem ersten Zeitpunkt und dem zweiten Zeitpunkt; und
Übertragen, zu der zweiten Vorrichtung und basierend auf der Zeitdifferenz, einer Information betreffend die Messung des Kanalzustandsinformations-Referenzsignals durch:
gemäß einer Bestimmung, dass die Zeitdifferenz einen Schwellenwert überschreitet, Übertragen, zu der zweiten Vorrichtung, einer Indikation, dass die Zeitdifferenz einen Schwellenwert überschreitet.

17. Verfahren, durchgeführt durch eine zweite Vorrichtung, das Verfahren umfassend:
Konfigurieren, durch die zweite Vorrichtung, eine erste Vorrichtung, um ein Kanalzustandsinformations-Referenzsignal von einer Zielzelle zu messen; und
Empfangen, von der ersten Vorrichtung, einer Information betreffend eine Messung des Kanalzustandsinformations-Referenzsignal basierend auf einer Zeitdifferenz zwischen einem ersten Zeitpunkt des Kanalzustandsinformations-Referenzsignal und einem zweiten Zeitpunkt, der durch die erste Vorrichtung genutzt wird, um das Kanalzustandsinformations-Referenzsignal zu messen durch:
Empfangen, von der ersten Vorrichtung, einer Indikation, dass die Zeitdifferenz einen Schwellenwert überschreitet.

## Revendications

1. Premier dispositif comprenant :
au moins un processeur ; et
au moins une mémoire comportant des codes de programme informatique ;
l'au moins une mémoire et les codes de programme informatique sont configurés pour, avec l'au moins un processeur, amener le premier dispositif au moins :
à déterminer une première temporisation d'un signal de référence d'informations d'état de canal provenant d'une cellule cible, le premier dispositif étant configuré par un deuxième dispositif pour mesurer le signal de référence d'informations d'état de canal ;
à déterminer une deuxième temporisation utilisée par le premier dispositif pour mesurer le signal de référence d'informations d'état de canal ;
à déterminer une différence de temporisation entre la première temporisation et la deuxième temporisation ; et
sur la base de la différence de temporisation, à transmettre au deuxième dispositif des informations concernant la mesure du signal de référence d'informations d'état de canal, dans lequel l'au moins une mémoire et les codes de programme informatique sont configurés pour, avec l'au moins un processeur, amener le premier dispositif à transmettre les informations :
lorsqu'il est déterminé que la différence de temporisation dépasse un seuil, en transmettant au deuxième dispositif une indication selon laquelle la différence de temporisation dépasse le seuil.

2. Premier dispositif selon revendication 1, dans lequel l'au moins une mémoire et les codes de programme informatique sont configurés pour, avec l'au moins un processeur, amener le premier dispositif à déterminer la première temporisation :
en détectant un bloc de signal de synchronisation de la cellule cible associée au signal de référence d'informations d'état de canal ; et
en déterminant la première temporisation sur la base du bloc de signal de synchronisation.

3. Premier dispositif selon revendication 1 ou 2, dans lequel l'au moins une mémoire et les codes de programme informatique sont configurés pour, avec l'au moins un processeur, amener le premier dispositif à déterminer la deuxième temporisation :
en déterminant la deuxième temporisation sur la base d'informations de temporisation d'une cellule de desserte fournie par le deuxième dispositif.

4. Premier dispositif selon revendication 1 ou 2, dans lequel l'au moins une mémoire et les codes de programme informatique sont configurés pour, avec l'au moins un processeur, amener le premier dispositif à déterminer la deuxième temporisation :
en déterminant une cellule à partir d'un ensemble de cellules comprenant la cellule cible, le premier dispositif étant configuré pour mesurer des signaux de référence d'informations d'état de canal à partir de l'ensemble de cellules ; et
en déterminant la deuxième temporisation sur la base d'informations de temporisation de la cellule déterminée.

5. Premier dispositif selon revendication 1, dans lequel l'au moins une mémoire et les codes de programme informatique sont configurés pour, avec l'au moins un processeur, amener le premier dispositif à transmettre les informations :
lorsqu'il est déterminé que la différence de temporisation est en dessous d'un seuil, en effectuant la mesure du signal de référence d'informations d'état de canal ; et
en transmettant un résultat de la mesure au deuxième dispositif.

6. Premier dispositif selon revendication 1, dans lequel l'au moins une mémoire et les codes de programme informatique sont configurés pour, avec l'au moins un processeur, amener le premier dispositif à transmettre les informations :
lorsqu'il est déterminé que la différence de temporisation dépasse un seuil, en obtenant une première temporisation mise à jour à partir de la cellule cible ;
en mettant à jour la différence de temporisation sur la base de la première temporisation mise à jour et de la deuxième temporisation ;
lorsqu'il est déterminé que la différence de temporisation mise à jour est en dessous du seuil dans une période de temps, en effectuant la mesure du signal de référence d'informations d'état de canal ; et
en transmettant un résultat de la mesure au deuxième dispositif.

7. Premier dispositif selon revendication 6, dans lequel l'au moins une mémoire et les codes de programme informatique sont configurés pour, avec l'au moins un processeur, amener en outre le premier dispositif :
lorsqu'il est déterminé que la différence de temporisation mise à jour dépasse le seuil pendant la période de temps, à transmettre au deuxième dispositif une indication selon laquelle la différence de temps dépasse le seuil.

8. Premier dispositif selon revendication 1 ou 7, dans lequel l'au moins une mémoire et les codes de programme informatique sont configurés pour, avec l'au moins un processeur, amener en outre le premier dispositif :
à recevoir du deuxième dispositif une indication de configuration pour désactiver la mesure du signal de référence d'informations d'état de canal.

9. Premier dispositif selon revendication 1, dans lequel l'au moins une mémoire et les codes de programme informatique sont configurés pour, avec l'au moins un processeur, amener le premier dispositif à transmettre les informations :
en effectuant la mesure du signal de référence d'informations d'état de canal ; et
en transmettant au deuxième dispositif un résultat de la mesure et une indication de temporisation précisant si la différence de temporisation dépasse un seuil.

10. Premier dispositif selon revendication 9, dans lequel l'indication de temporisation indique que la différence de temporisation dépasse le seuil, et
dans lequel l'au moins une mémoire et les codes de programme informatique sont configurés pour, avec l'au moins un processeur, amener en outre le premier dispositif :
à recevoir du deuxième dispositif une indication de configuration pour désactiver la mesure du signal de référence d'informations d'état de canal.

11. Deuxième dispositif comprenant :
au moins un processeur ; et
au moins une mémoire comportant des codes de programme informatique ;
l'au moins une mémoire et les codes de programme informatique sont configurés pour, avec l'au moins un processeur, amener le deuxième dispositif au moins :
à configurer un premier dispositif pour mesurer un signal de référence d'informations d'état de canal provenant d'une cellule cible ; et
à recevoir du premier dispositif des informations concernant la mesure du signal de référence d'informations d'état de canal sur la base d'une différence de temporisation entre une première temporisation du signal de référence d'informations d'état de canal et une deuxième temporisation utilisée par le premier dispositif pour mesurer le signal de référence d'informations d'état de canal, dans lequel l'au moins une mémoire et les codes de programme informatique sont configurés pour, avec l'au moins un processeur, amener le deuxième dispositif à recevoir les informations :
en recevant du premier dispositif une indication selon laquelle la différence de temporisation dépasse un seuil.

12. Deuxième dispositif selon revendication 11, dans lequel l'au moins une mémoire et les codes de programme informatique sont configurés pour, avec l'au moins un processeur, amener le deuxième dispositif à recevoir les informations :
en recevant un résultat de la mesure du premier dispositif.

13. Deuxième dispositif selon revendication 11, dans lequel l'au moins une mémoire et les codes de programme informatique sont configurés pour, avec l'au moins un processeur, amener en outre le deuxième dispositif :
à transmettre au premier dispositif une indication de configuration pour désactiver la mesure du signal de référence d'informations d'état de canal.

14. Deuxième dispositif selon revendication 11, dans lequel l'au moins une mémoire et les codes de programme informatique sont configurés pour, avec l'au moins un processeur, amener le deuxième dispositif à recevoir les informations :
en recevant du premier dispositif un résultat de la mesure et une indication de temporisation précisant si la différence de temporisation dépasse un seuil.

15. Deuxième dispositif selon revendication 14, dans lequel l'au moins une mémoire et les codes de programme informatique sont configurés pour, avec l'au moins un processeur, amener en outre le deuxième dispositif :
lorsqu'il est déterminé que l'indication de temporisation indique que la différence de temporisation dépasse le seuil, à transmettre au premier dispositif une indication de configuration pour désactiver la mesure du signal de référence d'informations d'état de canal.

16. Procédé effectué par un premier dispositif, le procédé comprenant les étapes suivantes :
au niveau du premier dispositif, déterminer une première temporisation d'un signal de référence d'informations d'état de canal provenant d'une cellule cible, le premier dispositif étant configuré par un deuxième dispositif pour mesurer le signal de référence d'informations d'état de canal ;
déterminer une deuxième temporisation utilisée par le premier dispositif pour mesurer le signal de référence d'informations d'état de canal ;
déterminer une différence de temporisation entre la première temporisation et la deuxième temporisation ; et
sur la base de la différence de temporisation, transmettre au deuxième dispositif des informations concernant la mesure du signal de référence d'informations d'état de canal :
lorsqu'il est déterminé que la différence de temporisation dépasse un seuil, en transmettant au deuxième dispositif une indication selon laquelle la différence de temporisation dépasse le seuil.

17. Procédé effectué par un deuxième dispositif, le procédé comprenant les étapes suivantes :
configurer par le deuxième dispositif un premier dispositif pour mesurer un signal de référence d'informations d'état de canal provenant d'une cellule cible ; et
recevoir du premier dispositif des informations concernant la mesure du signal de référence d'informations d'état de canal sur la base d'une différence de temporisation entre une première temporisation du signal de référence d'informations d'état de canal et une deuxième temporisation utilisée par le premier dispositif pour mesurer le signal de référence d'informations d'état de canal :
en recevant du premier dispositif une indication selon laquelle la différence de temporisation dépasse un seuil.
